# EUROPÄISCHE PATENTSCHRIFT

(11) **EP 4 084 982 B1**
(45) Veröffentlichungstag und Bekanntmachung des Hinweises auf die Patenterteilung: **17.09.2025**
(21) Anmeldenummer: 21700721.0
(22) Anmeldetag: 14.01.2021
(51) Int. Cl.: B60K 15/05

(54) **TANKKLAPPEN-SYSTEM EINES KRAFTFAHRZEUGS**
FUEL FILLER FLAP SYSTEM FOR A MOTOR VEHICLE
SYSTÈME DE TRAPPE DE REMPLISSAGE DE CARBURANT POUR VÉHICULE AUTOMOBILE

(30) Priorität: 08.04.2020 DE 102020109829
(43) Veröffentlichungstag der Anmeldung: 09.11.2022
(73) Patentinhaber: HUF Hülsbeck & Fürst GmbH & Co. KG, 42551 Velbert (DE)
(72) Erfinder: KOCH, Andreas, 42579 Heiligenhaus (DE); WIETKAMP, Stephan, 48161 Münster (DE)
(74) Vertreter: Zenz Patentanwälte Partnerschaft mbB
(86) Internationale Anmeldenummer: PCT/EP2021/050669
(87) Internationale Veröffentlichungsnummer: WO 2021/204429

(56) Entgegenhaltungen:
- DE-A1- 102006 042 447
- JP-A- 2018 118 538

## Beschreibung

Die Erfindung richtet sich auf ein Tankklappen-System eines Kraftfahrzeugs, aufweisend einen Träger, eine an dem Träger schwenkbar gelagerte Tankklappe, die zwischen einer Schließstellung und einer Offenstellung bewegbar ausgebildet ist, und einen zum Bewegen der Tankklappe aus der Schließstellung in die Offenstellung und zurück in die Schließstellung ausgebildeten Bewegungsmechanismus.

Aus der DE 10 2006 042447 A1 ist eine Tankklappe bekannt, welche an einer Kraftfahrzeugkarosserie zwischen einer Schließstellung und einer Offenstellung schwenkbar gelagert ist. Zum Bewegen der Tankklappe ist ein Bewegungsmechanismus vorgesehen, welcher eine Antriebseinheit und ein mechanisches Stellelement in Form einer Rückstellfeder umfasst, wobei die Rückstellfeder die Tankklappe unter ständiger Vorspannung in die Schließstellung drückt. Ferner umfasst der Bewegungsmechanismus ein Kreisbogensegment und ein Drahtseil. An dem Kreisbogensegment ist ein Ende des Drahtseils angebracht, wobei das andere Ende des Drahtseils mit der Antriebseinheit verbunden ist. Die Antriebseinheit weist eine Wickelwelle auf, auf die das Drahtseil aufgewickelt werden kann. Beim Aufwickeln des Drahtseils verschwenkt das Kreisbogensegment und mit diesem die Tankklappe. Dabei verschwenken das Kreisbogensegment und die Tankklappe um eine gemeinsame Achse. Dadurch wird entgegen der Kraft der Rückstellfeder die Tankklappe geöffnet.

Ein Tankklappen-System der Eingangs beschriebenen Art ist zum Beispiel aus der DE 10 2017 009 616 A1 bekannt und weist eine Tankmulde und eine Tankklappe mit einem an der Tankmulde angelenkten Scharnierarm auf, wobei die Tankklappe durch den Scharnierarm in einer Schwenkbewegung aus einer Schließstellung, in der die Tankmulde zumindest zum Teil verschlossen ist, in eine Offenstellung, in welcher die Tankmulde für ein Betanken des Kraftfahrzeugs von außen zugänglich ist, verschwenkt werden kann. Üblicherweise ist die Tankklappe an einem Träger bewegbar gelagert, wobei zusätzlich der gesamte Bewegungsmechanismus oder zumindest ein motorisches, zum Bewegungsmechanismus zählendes Antriebselement, welches zur Bewegung der Tankklappe aus der Schließstellung in die Offenstellung und zurück dient, an dem Träger gelagert ist. Diese Lagerung des Bewegungsmechanismus oder zumindest des motorischen Antriebselements an dem Träger hat den Nachteil, dass ein entsprechender Bauraum direkt an der Tankmulde vorgesehen sein muss, um den Träger mitsamt des gesamten Bewegungsmechanismus unterzubringen, wodurch der Konstruktion enge Randbedingungen gesetzt sind.

Der Erfindung liegt die Aufgabe zugrunde eine Lösung zu schaffen, die auf konstruktiv einfache Weise ein Tankklappen-System eines Kraftfahrzeugs bereitstellt, durch welches der an der Tankmulde vorzusehende Bauraum auf ein Minimum reduziert werden kann und welcher gegenüber den bekannten Tankklappen-Systemen eine größere Flexibilität bezüglich der Einbausituation gewährleistet.

Die Aufgabe wird erfindungsgemäß gelöst durch ein Tankklappen-System eines Kraftfahrzeugs mit den Merkmalen gemäß dem Anspruch 1.

Das erfindungsgemäße Tankklappen-System eines Kraftfahrzeugs weist einen Träger, eine an dem Träger schwenkbar gelagerte Tankklappe, die zwischen einer Schließstellung und einer Offenstellung bewegbar ausgebildet ist, und einen zum Bewegen der Tankklappe aus der Schließstellung in die Offenstellung und zurück in die Schließstellung ausgebildeten Bewegungsmechanismus auf. Der Bewegungsmechanismus weist ein motorisches Antriebselement und ein mechanisches Ausstellelement auf, wobei das mechanische Ausstellelement eine in die Offenstellung wirkende Ausstellkraft auf die Tankklappe ausübend ausgebildet ist. Ferner ist das motorische Antriebselement bei einer Bewegung der Tankklappe aus der Schließstellung in die Offenstellung eine der Ausstellkraft entgegenwirkende Führungskraft ausübend ausgebildet, wobei das motorische Antriebselement bei einer Bewegung der Tankklappe aus der Offenstellung in die Schließstellung eine die Ausstellkraft überwindende und die Tankklappe in die Schließstellung bewegende Rückführkraft auf die Tankklappe ausübend ausgebildet ist. Erfindungsgemäß ist das motorische Antriebselement in einem vorbestimmten Abstand zu dem Träger und/oder zu der Klappe angeordnet und über eine Zugeinrichtung mit der Tankklappe bewegungsverbunden. Die Zugeinrichtung ist über ein Getriebeelement mit der Tankklappe gekoppelt ist, wobei das Getriebeelement als ein drehbar gelagertes Scheibenelement ausgebildet ist. Das Scheibenelement ist dabei an dem Träger drehbar gelagert. Die Tankklappe ist ferner mittels einer Schwenkachse schwenkbar an dem Träger gelagert, wobei das Scheibenelement um eine Drehachse drehbar ist, die an dem Träger gelagert ist. Die Drehachse ist zu der Schwenkachse beabstandet angeordnet ist. Dabei ist die Rückführkraft größer als die Führungskraft und die Ausstellkraft, wobei die Ausstellkraft größer ist als die Führungskraft.

Vorteilhafte und zweckmäßige Ausgestaltungen und Weiterbildungen der Erfindung ergeben sich aus den Unteransprüchen.

Es sei angemerkt, dass unter dem Begriff "Tanken" im Sinne der Erfindung ein Auftanken eines Kraftfahrzeugs mit traditionellem Kraftstoff oder Wasserstoff sowie ein Aufladen einer Batterie eines Kraftfahrzeugs, also eines sogenannten Elektrofahrzeugs, zu verstehen ist, wobei die Tankklappe des erfindungsgemäßen Tankklappenmoduls entweder einen mit einem Kraftstofftank in Verbindung stehenden und von einem Tankdeckel verschlossenen Tankstutzen oder eine Ladebuchse für einen Ladestecker abdeckt.

Durch die Erfindung wird ein Tankklappen-System eines Kraftfahrzeugs zur Verfügung gestellt, welches sich durch eine einfache Konstruktion und durch ein besonderes Konzept hinsichtlich der Anordnung des motorischen Antriebselement auszeichnet. Erfindungsgemäß ist das motorische Antriebselement in einem vorbestimmten Abstand zu dem Träger und/oder zu der Tankklappe angeordnet, so dass das motorische Antriebselement keinen Bauraum direkt an dem Träger oder der Tankklappe benötigt, wodurch kein Bauraum von dem motorischen Antriebselement an der Tankmulde beansprucht wird. Gemäß der Erfindung wird dabei der vorbestimmte Abstand von einer Zugeinrichtung überwunden, so dass eine flexible Anordnung des motorischen Antriebselements in der Nähe der Tankklappe, aber nicht unmittelbar direkt an der Tankklappe möglich ist. Das Getriebeelement kann dabei beispielsweise als wenigstens eine Umlenkwelle oder als wenigstens eine Umlenkrolle ausgebildet sein, so dass das motorische Antriebselement sehr flexibel und beabstandet zu dem Träger und der Tankklappe angeordnet werden kann. Konstruktiv besonders günstig ist es, dass das Getriebeelement als ein drehbar gelagertes Scheibenelement ausgebildet ist. Mit Hilfe des Scheibenelements kann beispielsweise eine seilförmig ausgebildete Zugeinrichtung sehr effizient auf- und abgerollt und sogar umgelenkt werden. Eine Umlenkung der Zugeinrichtung ist durch entsprechende Umlenkrollen oder Umlenkwellen möglich, die zusätzlich zu dem Scheibenelement vorgesehen sein können, die aber im Unterschied zum Scheibenelement nicht einem Auf- oder Abrollen einer seilartig ausgebildeten Zugeinrichtung dienen.

Besonders vorteilhaft hinsichtlich einer kostengünstigen Ausführung der Zugeinrichtung ist es in Ausgestaltung der Erfindung, wenn die Zugeinrichtung als ein Seil mit einem ersten Ende und einem zweiten Ende ausgebildet ist, wobei das erste Ende des Seils mit dem motorischen Antriebselement verbunden ist und das zweite Ende des Seils mit der Tankklappe verbunden ist, und wobei das Seil zwischen seinem ersten Ende und seinem zweiten Ende an einem Festlegungspunkt an dem Scheibenelement fixiert ist.

Diesbezüglich ist in weiterer Ausgestaltung vorgesehen, dass das Scheibenelement einen Achszapfen aufweist, welcher sich vom Zentrum des Scheibenelements aus und in axialer Richtung des Scheibenelements erstreckt, wobei ein Abschnitt des Seils, welcher zwischen dem ersten Ende und dem Festlegungspunkt liegt, um den Achszapfen geführt ist. Diese Führung des Seils um den Achszapfen erlaubt eine Übersetzung oder Untersetzung, so dass je nach Ausgestaltung der Durchmesser des Scheibenelements und des Achszapfens entsprechend Einfluss auf das Drehmoment und auf die Drehzahl genommen werden kann.

Diesbezüglich ist dann in weiterer Ausgestaltung der Erfindung vorgesehen, dass der Achszapfen einen Achsdurchmesser aufweist und das Scheibenelement einen Scheibendurchmesser aufweist, wobei der Achsdurchmesser kleiner ist als der Scheibendurchmesser. Auf diese Weise findet eine Übersetzung ins Langsame statt, so dass an dem Scheibenelement das Drehmoment vergrößert und die Drehzahl verkleinert wird.

Gemäß einer alternativen Ausgestaltung sieht die Erfindung vor, dass die Zugeinrichtung ein erstes Seil und ein zweites Seil umfasst, wobei das erste Seil das motorische Antriebselement mit dem Scheibenelement bewegungskoppelnd verbindet, und wobei das zweite Seil das Scheibenelement mit der Tankklappe bewegungskoppelnd verbindet. Auf diese Weise ist zum Beispiel eine aufwendige und komplizierte Führung eines einteiligen Seils von dem Durchmesser des Achszapfens auf den Durchmesser des Scheibenelements nicht notwendig, so dass sich die Konstruktion entsprechend vereinfacht und kostengünstiger ist.

Um beispielsweise die Geschwindigkeit des Öffnens oder Schließens der Tankklappe beeinflussen zu können, sieht die Erfindung in weiterer Ausgestaltung vor, dass das Scheibenelement eine zum Aufrollen und Abrollen zumindest eines Abschnitts der Zugeinrichtung ausgebildete Wickelkontur aufweist.

Diesbezüglich sieht die Erfindung in entsprechender Ausgestaltung vor, dass die Wickelkontur mit wenigstens zwei unterschiedlichen, stetig ineinander übergehenden Radien oder exzentrisch ausgebildet ist. Diese unsymmetrische Gestalt der Wickelkontur erlaubt durch unterschiedliche Radien, dass beispielsweise die Zugeinrichtung bei der Bewegung der Tankklappe in die Schließstellung auf dem letzten Bewegungsweg mit einer höheren Kraft zugezogen wird, um die Tankklappe dichtend in eine vorhandene Dichtung zu ziehen.

Als alternative Ausführung der Zugeinrichtung ist in Ausgestaltung der Erfindung vorgesehen, dass die Zugeinrichtung eine Seilschlaufe und ein Seil aufweist, wobei die Seilschlaufe um einen sich vom Zentrum des Scheibenelements aus und in axialer Richtung des Scheibenelements erstreckenden Achszapfen und um einen Antriebszapfen des motorischen Antriebselements gewunden ist, und wobei das Seil das Scheibenelement mit der Tankklappe bewegungskoppelnd verbindet. Durch diese Ausgestaltung lassen sich gekreuzte und geschränkte Führungen der "unendlichen" Seilschlaufe realisieren, so dass zum Beispiel das Scheibenelement in entgegengesetzte Drehrichtungen bewegt werden kann oder Drehbewegungen von zwei Achsen übertragen werden können.

Ferner ist bei der Erfindung eine weitere Alternative darin vorgesehen, dass die Zugeinrichtung eine Flex-Welle und ein Seil aufweist, wobei die Flex-Welle das motorische Antriebselement und das Scheibenelement bewegungsgekoppelt verbindet, und wobei das Seil das Scheibenelement mit der Tankklappe bewegungskoppelnd verbindet. Bei der Flex-Welle handelt es sich um eine biegsame Welle aus beispielsweise einem Federstahldraht, wobei die Flex-Welle nur in die Drehrichtung des motorischen Antriebselements bewegbar ist, wobei die Flex-Welle gestützt in einem Rohr geführt angeordnet ist.

In einer weiteren, alternativen Ausgestaltung sieht die Erfindung vor, dass die Zugeinrichtung ein Seil und ein Zugmittel aufweist, wobei das Seil das Scheibenelement mit der Tankklappe bewegungskoppelnd verbindet, und wobei das Zugmittel das motorische Antriebselement und das Scheibenelement bewegungsgekoppelt verbindet.

Für die Alternative des Zugmittels sieht die Erfindung in Ausgestaltung vor, dass das Zugmittel als ein Zahnriemen ausgebildet ist und das Scheibenelement eine Zahnriemenscheibe aufweist. Ein wesentlicher Vorteil dieser Ausgestaltung ist in dem geringen Verschleiß und der damit verbundenen langen Lebensdauer des Zugmittels zu sehen.

Andererseits sieht die Erfindung in Ausgestaltung des Zugmittels vor, dass das Zugmittel als eine Zahnkette ausgebildet ist und das Scheibenelement ein Antriebsritzel für die Zahnkette aufweist. Mit dieser Ausgestaltung können große Kräfte übertragen werden, wobei keine Vorspannung des Zugmittels notwendig ist.

Darüber hinaus sieht die Erfindung in Ausgestaltung des Zugmittels vor, dass das Zugmittel als ein Flachriemen oder als ein Keilriemen ausgebildet ist und das Scheibenelement eine Riemenscheibe aufweist. Hierbei erfolgt die Kraftübertragung elastisch mit einem geräuscharmen, stoß- und schwingungsdämpfenden Lauf, wobei der Wartungsaufwand sehr gering ist, da eine Schmierung nicht erforderlich ist.

Für den Fall, dass die Tankklappe im Winter in ihrer Schließstellung an dem Träger angefroren ist, sieht die Erfindung in Ausgestaltung vor, dass an dem Scheibenelement eine Exzenterkontur angeformt ist, welche von der Schließstellung bis zu einer zwischen der Schließstellung und der Offenstellung liegenden Anfangsausstellposition mit der Tankklappe zusammenwirkt, wenn die Ausstellkraft des mechanischen Ausstellelements die Tankklappe nicht aus der Schließstellung heraus bis in die Anfangsausstellposition drängt.

Schließlich ist es in Ausgestaltung der Erfindung konstruktiv besonders einfach, wenn das mechanische Ausstellelement eine um die Schwenkachse gewundene Drehfeder ist, von welcher sich ein erster Federarm an der Tankklappe abstützt und von welcher sich ein zweiter Federarm an dem Träger abstützt.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind

In der Zeichnung zeigt:
Figur 1 eine schematische Seitenansicht eines Kraftfahrzeugs mit einem erfindungsgemäßen Tankklappen-System,
Figur 2 eine perspektivische Ansicht des erfindungsgemäßen Tankklappen-Systems mit einer Tankklappe, die in einer Schließstellung angeordnet ist,
Figur 3 eine perspektivische Ansicht des erfindungsgemäßen Tankklappen-Systems mit der Tankklappe, die in einer Offenstellung angeordnet ist,
Figur 4 eine perspektivische Rückansicht auf das in Figur 3 gezeigte Tankklappen-System mit der in der Offenstellung angeordneten Tankklappe,
Figur 5 eine exemplarische Perspektivansicht auf die an einem Träger gelagerte Tankklappe und einen Bewegungsmechanismus des erfindungsgemäßen Tankklappen-Systems,
Figur 6 eine Draufsicht auf das Tankklappen-System mit einer ein motorisches Antriebselement und die Tankklappe koppelnden Zugeinrichtung, wobei die Tankklappe in ihrer Schließstellung angeordnet ist,
Figur 7 eine Draufsicht auf das Tankklappen-System mit der das motorische Antriebselement und die Tankklappe koppelnden Zugeinrichtung, wobei die Tankklappe in ihrer Offenstellung angeordnet ist,
Figur 8 eine Seitenansicht auf ein Scheibenelement des Bewegungsmechanismus des erfindungsgemäßen Tankklappen-Systems,
Figur 9 eine Ausgestaltung eines Zugmittels des erfindungsgemäßen Tankklappen-Systems,
Figur 10 eine andere Ausgestaltung eines Zugmittels des erfindungsgemäßen Tankklappen-Systems,
Figur 11 eine Perspektivansicht auf ein Scheibenelement des erfindungsgemäßen Tankklappen-Systems, und
Figur 12 eine Draufsicht auf das in Figur 11 gezeigte Scheibenelement.

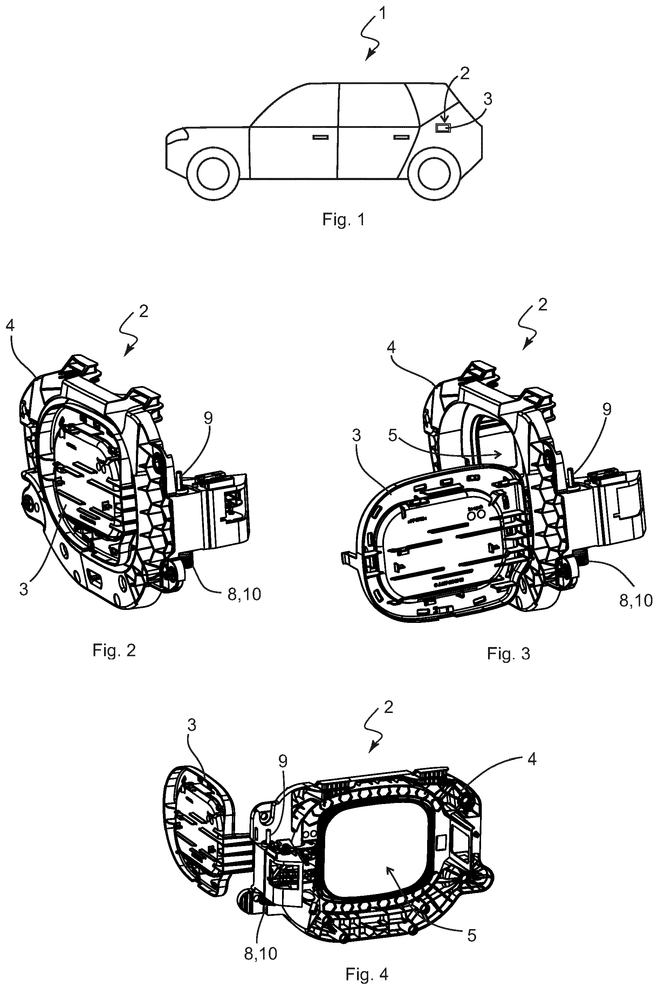

In Figur 1 ist ein Kraftfahrzeug 1 in Form eines PKWs exemplarisch dargestellt, welches in dem Beispiel über ein Tankklappen-System 2 verfügt, welches eine Tankklappe 3 aufweist. Die Tankklappe 3 verschließt eine in den Figuren nicht näher dargestellte Mulde, in welcher entweder ein mit einem Kraftstofftank in Verbindung stehender und von einem Tankdeckel verschlossener Tankstutzen oder eine Ladebuchse für einen Ladestecker angeordnet sind. Das erfindungsgemäße Tankklappen-System 2 weist ferner einen Träger 4 auf, welcher an einem Karosseriebauteil des Kraftfahrzeugs 1 befestigbar ist. An dem beispielsweise aus den Figuren 2 und 3 ersichtlichen Träger 4 ist die Tankklappe 3 schwenkbar gelagert, so dass die Tankklappe 3 zwischen einer in Figur 2 gezeigten Schließstellung, in welcher die Tankklappe 3 die Mulde abdeckt und ggf. verschließt, und einer in den Figuren 3 und 4 gezeigten Offenstellung, in welcher ein Benutzer Zugriff durch eine in dem Träger 4 ausgebildete Durchgangsöffnung 5 auf das Innere der Mulde hat, bewegbar ausgebildet ist. Folglich verschließt die Tankklappe 3 in ihrer Schließstellung die in dem Träger 4 ausgebildete Durchgangsöffnung 5, wohingegen die Tankklappe 3 in ihrer Offenstellung von der Durchgangsöffnung 5 abgehoben angeordnet ist und einen Durchlass durch die Durchgangsöffnung 5 hindurch freigibt.

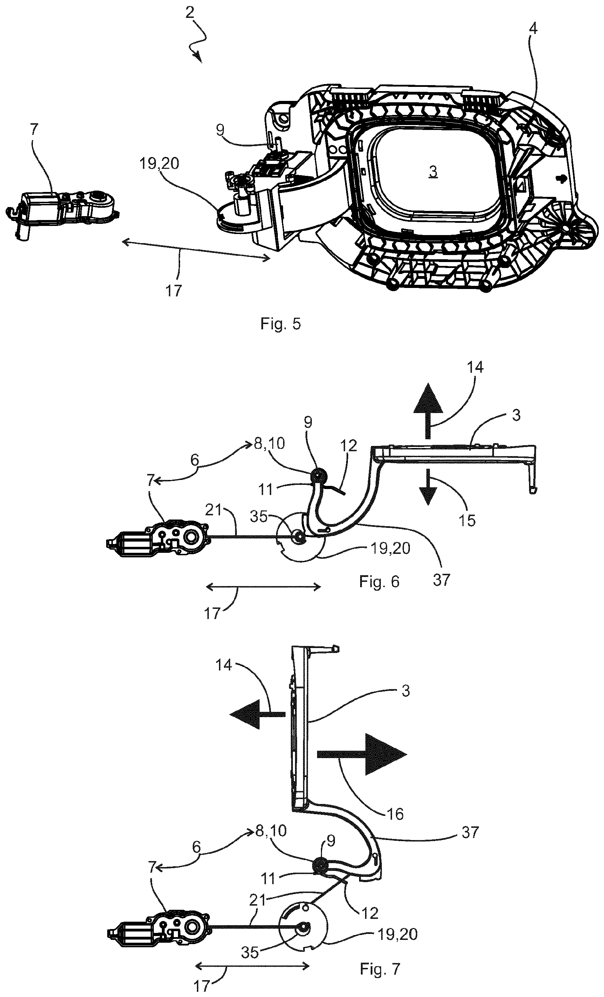

Ferner weist das erfindungsgemäße Tankklappen-System 2 einen Bewegungsmechanismus 6 auf, welcher zum Bewegen der Tankklappe 3 aus der Schließstellung in die Offenstellung und zurück in die Schließstellung ausgebildet ist. Der Bewegungsmechanismus 6 umfasst ein motorisches Antriebselement 7, wie es aus der Figur 5 ersichtlich ist. Zusätzlich umfasst der Bewegungsmechanismus 6 ein mechanisches Ausstellelement 8, welches zum Beispiel aus den Figuren 2 und 3 ersichtlich ist. Die Tankklappe 3 ist mittels einer Schwenkachse 9 (siehe zum Beispiel Figuren 5, 6 und 7) schwenkbar an dem Träger 4 gelagert, wobei die Schwenkachse 7 selbst an dem Träger 4 gelagert ist. Dabei ist das mechanische Ausstellelement 8 als eine Drehfeder 10 ausgebildet, welche um die Schwenkachse 9 gewunden ist. Die Drehfeder 10 weist einen ersten Federarm 11 und einen zweiten Federarm 12 auf, wobei sich der erste Federarm 11 an der Tankklappe 3 abstützt, wohingegen sich der zweite Federarm 12 an dem Träger 4 abstützt. In einem Normalbetrieb des Tankklappen-Systems 2 übt das mechanische Ausstellelement 8 eine Ausstellkraft 14 auf die Tankklappe 3 aus. Die von dem mechanischen Ausstellelement 8 auf die Tankklappe 3 ausgeübte Ausstellkraft 14 wirkt in die Offenstellung, wie in Figur 6 für die in ihrer Schließstellung angeordnete Tankklappe 3 exemplarisch dargestellt ist. Wenn die Tankklappe 3 in ihrer Schließstellung verbleiben soll, so wirkt das motorische Antriebselement 7 der Ausstellkraft 14 entgegen und hält die Tankklappe 3 in der Schließstellung fest. Für den Normalbetrieb zum Öffnen der Tankklappe 3, bei welchem sich die Tankklappe 3 aus der Schließstellung in die Offenstellung bewegt, übt das motorische Antriebselement 7 eine der Ausstellkraft 14 entgegenwirkende Führungskraft 15 aus, wie es ebenfalls in Figur 6 exemplarisch dargestellt ist. Bei der Bewegung der Tankklappe 3 aus der Schließstellung in die Offenstellung ist die Führungskraft 15 des motorischen Antriebselements 7 kleiner ausgebildet als die Ausstellkraft 14 des mechanischen Ausstellelements 8, damit die Tankklappe 3 nicht plötzlich und mit hoher Geschwindigkeit in die Offenstellung schwenkt. Vielmehr findet mit Hilfe des motorischen Antriebselements 7 eine geführte Bewegung der Tankklappe 3 mit einer gewünschten Geschwindigkeit in die Offenstellung statt, indem das motorische Antriebselement 7 der Ausstellkraft 14 des mechanischen Ausstellelements 8 entgegenwirkt und diese reduziert. Folglich ist das motorische Antriebselement 7 bei einer Bewegung der Tankklappe 3 aus der Schließstellung in die Offenstellung eine der Ausstellkraft 14 entgegenwirkende Führungskraft 15 ausübend ausgebildet. Bei einer Bewegung der Tankklappe 3 aus der Offenstellung in die Schließstellung übt das motorische Antriebselement 7 hingegen eine Rückführkraft 16 aus, die größer ist als die Ausstellkraft 14 des mechanischen Ausstellelements 8, was auch erforderlich ist, um die Tankklappe 3 aus der Offenstellung zurück in die Schließstellung zu bewegen. Folglich ist das motorische Antriebselement 7 bei einer Bewegung der Tankklappe 3 aus der Offenstellung in die Schließstellung eine die Ausstellkraft 14 überwindende Rückführkraft 16 auf die Tankklappe 3 ausübend ausgebildet, wie es exemplarisch in Figur 7 dargestellt ist. Unabhängig davon, ob die Bewegung der Tankklappe 3 eine Bewegung zum Öffnen oder Schließen ist, ist die von dem motorischen Antriebselement 7 ausgeübte Führungskraft 15 oder Rückführkraft 16 eine Kraft, die der Ausstellkraft 14 des mechanischen Ausstellelements 8 entgegengerichtet ist oder im Fall der Rückführkraft 16 sogar die Ausstellkraft 14 überwindet.

Erfindungsgemäß ist zur Erhöhung der Flexibilität für den Einbauort des motorischen Antriebselements 7 vorgesehen, dass das motorische Antriebselement 7 in einem vorbestimmten Abstand 17 zu dem Träger 4 und/oder zu der Tankklappe 3 angeordnet ist, wie es beispielhaft in den Figuren 5, 6 und 7 gezeigt ist. Zur Überbrückung des vorbestimmten Abstands ist erfindungsgemäß ferner vorgesehen, dass das motorische Antriebselement 7 über eine Zugeinrichtung 18 mit der Tankklappe 3 bewegungsverbunden ist, wobei die Zugeinrichtung 18 die Führungskraft 15 oder die Rückführkraft 16 des motorischen Antriebselements 7 auf die Tankklappe 3 überträgt, worauf nachstehend noch genauer eingegangen wird.

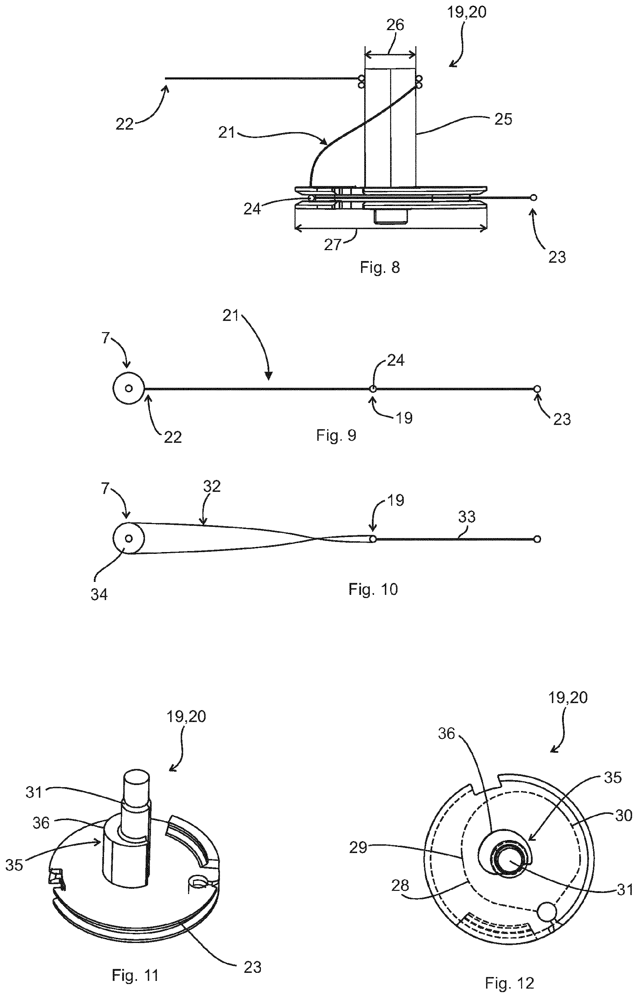

Wie aus den Figuren 6 und 7 zu erkennen ist, ist die Zugeinrichtung 18 über ein Getriebeelement 19 mit der Tankklappe 3 gekoppelt. Das Getriebeelement 19 kann zum Beispiel als eine Umlenkrolle ausgebildet sein, wobei in den in den Figuren gezeigten Ausführungsformen das Getriebeelement 19 als ein drehbar gelagertes Scheibenelement 20 ausgebildet ist. Bei diesen Ausführungsformen ist ferner das Scheibenelement 20 an dem Träger 4 drehbar gelagert, wobei auch ein anderer Ort der Lagerung des Scheibenelements 20 denkbar ist. Das Scheibenelement 20 dient zur Führung der Zugeinrichtung 18. Gemäß einer Ausführungsform ist die Zugeinrichtung 18 als ein Seil 21 mit einem ersten Ende 22 und einem zweiten Ende 23 ausgebildet, wie es exemplarisch in den Figuren 8 und 9 dargestellt ist. Dabei ist das erste Ende 22 des Seils 21 mit dem motorischen Antriebselement 7 verbunden, wohingegen das zweite Ende 23 des Seils 21 mit der Tankklappe 3 verbunden ist. Ferner ist das Seil 21 zwischen seinem ersten Ende 22 und seinem zweiten Ende 23 an einem Festlegungspunkt 24 an dem Scheibenelement 20 fixiert, wie es aus der Zusammenschau der Figuren 6 bis 9 ersichtlich ist. Dabei ist ein Abschnitt des Seils 21, welcher zwischen dem ersten Ende 22 und dem Festlegungspunkt 24 liegt, um einen Achszapfen 25 geführt (siehe zum Beispiel Figur 8), welcher an dem Scheibenelement 20 angeformt ist und welcher sich vom Zentrum des Scheibenelements 20 aus und in axialer Richtung des Scheibenelements 20 erstreckt. Wie aus der Figur 8 ersichtlich ist, weist der Achszapfen 25 einen Achsdurchmesser 26 auf, wobei das Scheibenelement 20 einen Scheibendurchmesser 27 aufweist. Dabei ist der Achsdurchmesser 26 kleiner als der Scheibendurchmesser 27 ausgebildet, wodurch eine Übersetzung stattfindet, so dass beispielsweise die Tankklappe 3 mit einer hohen Kraft in eine Dichtung gezogen werden kann, wenn die Tankklappe 3 in die Schließstellung bewegt wird.

Gemäß einer alternativen Ausgestaltung, die in den Figuren nicht gezeigt ist, ist es auch denkbar, dass die Zugeinrichtung 18 ein erstes Seil und ein zweites Seil umfasst, wobei das erste Seil das motorische Antriebselement 7 mit dem Scheibenelement 20 bewegungskoppelnd verbindet und das zweite Seil das Scheibenelement 20 mit der Tankklappe 3 bewegungskoppelnd verbindet. Dabei kann das erste Seil wiederum an einem Achszapfen 25 mit einem Achsdurchmesser 26 angreifen, wohingegen das zweite Seil am Scheibendurchmesser 27 des Scheibenelements 20 auf- und abgewickelt wird. Bei dieser alternativen Ausgestaltung entfällt eine Führung des einteiligen Seils 21 von dem kleinen Achsdurchmesser 26 auf den größeren Scheibendurchmesser 27, wodurch diese Ausführung wartungsfreier und weniger anfällig gegenüber Störungen ist.

Sowohl bei der Ausgestaltung mit einem einzigen Seil 21 oder mit einem ersten Seil und einem zweiten Seil weist das Scheibenelement 20 eine zum Aufrollen und Abrollen zumindest eines Abschnitts der Zugeinrichtung 18 ausgebildete Wickelkontur 28 auf (siehe zum Beispiel Figur 12). Bei einer Ausgestaltung des Scheibenelements 20 mit der Wickelkontur 28 ist die Zugeinrichtung 18 (d. h. das Seil 21 oder das erste und/oder zweite Seil) auf dem Scheibenelement 20 aufgewickelt, wozu das Scheibenelement 20 die Wickelkontur 28 aufweist, wie durch die gestrichelte Linie in Figur 12 dargestellt ist. Die zum Aufrollen und Abrollen der Zugeinrichtung 18 (d. h. des Seils 21 bzw. des ersten und/oder zweiten Seils) ausgebildete Wickelkontur 28 des Scheibenelements 20 ist von außen nicht sichtbar. Dabei ist die Wickelkontur 28 mit wenigstens zwei unterschiedlichen, stetig ineinander übergehenden Radien 29, 30 oder exzentrisch ausgebildet, wie die Figur 12 zeigt. Die nach Art eines Seils ausgebildete Zugeinrichtung 18 wickelt dann über den kleinen Radius 29 ab, wenn die Tankklappe 3 mit einer hohen Kraft bewegt werden soll, was beispielsweise bei einer Bewegung der Tankklappe 3 zurück in die Schließstellung der Fall ist, wenn der Umfangsrand der Tankklappe 3 in eine Dichtung reingezogen werden soll. Hingegen wickelt die Zugeinrichtung 18 über den großen Radius 30 ab, wenn keine große Kraft erforderlich ist und die Tankklappe 3 allein durch die Ausstellkraft des mechanischen Ausstellelements 8 in die Offenstellung gedrängt wird. Das Scheibenelement 20 ist dabei um eine Drehachse 31 drehbar, die an dem Träger 4 gelagert ist, wobei die Drehachse 31 zu der Schwenkachse 9 beabstandet angeordnet ist.

Eine derartige Wickelkontur 28 an dem Scheibenelement 20 kann bei solchen Ausführungsformen, wie sie vorstehend genannt sind und nachstehend noch genannt werden, zum Einsatz kommen, bei denen ein seilartig ausgebildetes Element mit einem ersten Ende an dem Scheibenelement 20 und mit einem zweiten Ende an der Tankklappe 3 befestigt ist und somit das Scheibenelement 20 mit der Tankklappe 3 verbindet.

Eine weitere Ausführungsform, bei welcher die Wickelkontur 28 an dem Scheibenelement 20 ausgebildet sein kann, ist in Figur 10 dargestellt. Bei dieser Ausführungsform weist die Zugeinrichtung 18 eine Seilschlaufe 32 und ein Seil 33 auf. Dabei ist die Seilschlaufe 32 um den sich vom Zentrum des Scheibenelements 20 aus und in axialer Richtung des Scheibenelements 20 erstreckenden Achszapfen 25 und um einen Antriebszapfen 34 des motorischen Antriebselements 7 gewunden. Ferner verbindet das Seil 33 das Scheibenelement 20 mit der Tankklappe 3 bewegungskoppelnd, wie es vorstehend für eine andere Ausführungsform bereits beschrieben wurde.

Anstelle einer Seilschlaufe 32 ist es in einer alternativen Ausführungsform auch denkbar, dass die Zugeinrichtung 18 eine Flex-Welle und ein Seil aufweist, wobei die Flex-Welle das motorische Antriebselement 7 und das Scheibenelement 20 bewegungsgekoppelt verbindet, wohingegen das Seil das Scheibenelement 20 mit der Tankklappe 3 bewegungskoppelnd verbindet. Folglich kann statt der Seilschlaufe 32 auch eine Flex-Welle eingesetzt werden, um die Drehbewegung des Scheibenelements 20 zu beeinflussen.

Ferner sind anstelle einer Seilschlaufe 32 oder einer Flex-Welle auch Ausführungsformen denkbar, bei denen die Zugeinrichtung 18 ein Seil und ein Zugmittel aufweist, wobei das Seil wiederum das Scheibenelement 20 mit der Tankklappe 3 bewegungskoppelnd verbindet. Das Zugmittel stellt ferner eine bewegungsgekoppelte Verbindung zwischen dem motorischen Antriebselement 7 und dem Scheibenelement 20 her. Für eine Ausgestaltung des Zugmittels kommen verschiedene Möglichkeiten in Frage. Beispielsweise kann das Zugmittel als ein Zahnriemen ausgebildet sein, wobei dann das Scheibenelement 20 eine Zahnriemenscheibe aufweist. Ferner ist es denkbar, dass das Zugmittel als eine Zahnkette ausgebildet ist, wobei dann das Scheibenelement 20 ein Antriebsritzel für die Zahnkette aufweist. Schließlich ist es auch denkbar, dass das Zugmittel als ein Flachriemen oder als ein Keilriemen ausgebildet ist, wobei hierbei das Scheibenelement 20 dann eine Riemenscheibe aufweist.

Für einen Betrieb des Tankklappen-Systems 2 bei einer an dem Träger 4 oder einer Dichtung festgefrorenen Tankklappe 3 ist in weiterer Ausgestaltung der Erfindung eine Möglichkeit vorgesehen, die Tankklappe 3 aus einem solchen Blockadezustand herauszubewegen. Zu diesem Zweck ist das motorische Antriebselement 7 derart ausgebildet, die Tankklappe 3 mit einer Hilfskraft aus der Schließstellung heraus bis zu einer Anfangsausstellposition, die zwischen der Schließstellung und der Offenstellung liegt, zu drängen, wenn der Blockadezustand vorliegt, bei welchem die Ausstellkraft 14 des mechanischen Ausstellelements 8 nicht ausreicht, um die Tankklappe 3 aus der Schließstellung herauszubewegen. Dabei ist die Hilfskraft des motorischen Antriebselements 7 größer als die Ausstellkraft 14 des mechanischen Ausstellelements 8. Damit das motorische Antriebselement 7 die Tankklappe 3 aus der Schließstellung herausdrängen kann, ist an dem Achszapfen 25 des Scheibenelements 20 eine Exzenterkontur 35 angeformt. Diese Exzenterkontur 35 wirkt mit der Tankklappe 3 zusammen, wobei sich dieses Zusammenwirken auf den Bereich von der Schließstellung bis zu der Anfangsausstellposition bezieht und wobei das Zusammenwirken nur dann vorliegt, wenn die Ausstellkraft 14 des mechanischen Ausstellelements 8 die Tankklappe 3 nicht aus der Schließstellung heraus über die Anfangsausstellposition hinaus drängt, was bei dem Blockadezustand der Fall ist, bei welchem die Tankklappe 3 an dem Träger 4 oder einer Dichtung angefroren festgehalten ist. Die Tankklappe 3 weist einen U-förmig ausgebildeten Schwenkarm 37 auf, dessen freies Ende über die Schwenkachse 9 gesteckt und dadurch drehbar gelagert ist. In dem Blockadezustand drängt das motorische Antriebsmittel 7 die Exzenterkontur 35 gegen den Schwenkarm 37, wobei die Exzenterkontur 35 von der Schließstellung bis zu der Anfangsausstellposition mit der Tankklappe 3 zusammenwirkt, wenn die Ausstellkraft 14 des mechanischen Ausstellelements 8 die Tankklappe 3 nicht aus der Schließstellung heraus bis zu der Anfangsausstellposition drängt. Die Anfangsausstellposition ist eine aus der Schließstellung heraus in Richtung der Offenstellung bewegte Position, in welcher die Tankklappe 3 mit Bezug auf die Schließstellung um die Schwenkachse 9 in Richtung der Offenstellung verschwenkt angeordnet ist. Der Winkel der Verschwenkung kann dabei in einem Bereich zwischen 2° bis 10° liegen. Wie beispielsweise aus den Figuren 11 und 12 ersichtlich ist, ist die Exzenterkontur 35 mit einem ansteigenden Radius 36 ausgebildet, welcher bei Drehung des Scheibenelements 20 in Anlage an den Schwenkarm 37 der Tankklappe 3 gelangend und gegen den Schwenkarm 37 drängend sowie dabei die Tankklappe 3 in die Anfangsausstellposition drängend ausgebildet ist. Die Exzenterkontur 35 dient nur dazu, in dem Blockadezustand die Tankklappe 3 mit Hilfe der Hilfskraft bis zu der Anfangsausstellposition zu bewegen, aus welcher das mechanische Ausstellelement 8 dann die Tankklappe 3 mit Hilfe der Ausstellkraft 14 bis in die Offenstellung drängt und die Exzenterkontur 35 keine Wirkung mehr auf die Tankklappe 3 ausübt. Der ansteigende Radius 36 der Exzenterkontur 35 ist dabei in Abhängigkeit der Drehrichtung des Scheibenelements 20 ausgebildet. Beispielsweise sind bei der Ausführungsform der Figur 10 zwei Drehrichtungen des Scheibenelements 20 möglich, so dass zur Überwindung des Blockadezustands das Scheibenelement 20 entgegen der eigentlichen Drehrichtung zum Ausstellen der Tankklappe 3 gedreht wird, wodurch die Exzenterkontur 35 die Tankklappe 3 in einem ersten Schritt aus der Schließstellung in die Anfangsausstellposition drängt. Nach dem Erreichen der Anfangsausstellposition dreht das Scheibenelement 20 dann wieder in die eigentliche Drehrichtung zum Ausstellen der Tankklappe 3, wobei die Drehrichtung des Scheibenelements 20 von dem motorischen Antriebselement 7 über die Seilschlaufe 32 gesteuert wird. Bei der in Figur 9 gezeigten Ausführungsform kann das motorische Antriebselement 7 zum Lösen des Blockadezustands nur eine Ziehbewegung ausüben, so dass die Tankklappe 3 zum Lösen des Blockadezustands entgegen der Öffnungsrichtung bewegt wird und das Scheibenelement 20 sich entgegen der Drehrichtung zum Öffnen dreht, wodurch die Tankklappe 3 aus der angefrorenen Stellung herausbewegt werden kann. Hierbei muss nicht zwingend eine Exzenterkontur 35 vorgesehen sein, wobei die Exzenterkontur 35 ein Losbrechen der Tankklappe 3 fördern kann.

Zusammenfassend ist vorstehend das erfindungsgemäße Tankklappen-System 2 eines Kraftfahrzeugs 1 beschrieben worden, welches den Träger 4, die an dem Träger 4 schwenkbar gelagerte Tankklappe 3, die zwischen der Schließstellung und der Offenstellung bewegbar ausgebildet ist, und den zum Bewegen der Tankklappe 3 aus der Schließstellung in die Offenstellung und zurück in die Schließstellung ausgebildeten Bewegungsmechanismus 6 aufweist. Der Bewegungsmechanismus 6 selbst weist das motorische Antriebselement 7 und das mechanische Ausstellelement 8 auf, wobei das mechanische Ausstellelement 8 mit der in die Offenstellung wirkenden Ausstellkraft 14 auf die Tankklappe 3 ausübend ausgebildet ist. Das motorische Antriebselement 7 ist ferner bei einer Bewegung der Tankklappe 3 aus der Schließstellung in die Offenstellung mit der der Ausstellkraft 14 entgegenwirkenden Führungskraft 15 ausgebildet, wobei bei der Bewegung der Tankklappe 3 aus der Offenstellung in die Schließstellung die die Ausstellkraft 14 überwindende Rückführkraft 16 des motorischen Antriebselements 7 auf die Tankklappe 3 wirkt. Das motorische Antriebselement 7 ist in dem vorbestimmten Abstand 17 zu dem Träger 4 und/oder zu der Tankklappe 3 angeordnet und über die Zugeinrichtung 18 mit der Tankklappe 3 bewegungsverbunden.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der von den Ansprüchen definierte Bereich der Erfindung verlassen wird.

## Patentansprüche

1. Tankklappen-System (2) für ein Kraftfahrzeug (1), aufweisend einen Träger (4), eine an dem Träger (4) schwenkbar gelagerte Tankklappe (3), die zwischen einer Schließstellung und einer Offenstellung bewegbar ausgebildet ist, und einen zum Bewegen der Tankklappe (3) aus der Schließstellung in die Offenstellung und zurück in die Schließstellung ausgebildeten Bewegungsmechanismus (6), wobei der Bewegungsmechanismus (6) ein motorisches Antriebselement (7) und ein mechanisches Ausstellelement (8) aufweist, wobei das mechanische Ausstellelement (8) eine in die Offenstellung wirkende Ausstellkraft (14) auf die Tankklappe (3) ausübend ausgebildet ist, wobei das motorische Antriebselement (7) bei einer Bewegung der Tankklappe (3) aus der Schließstellung in die Offenstellung eine der Ausstellkraft (14) entgegenwirkende Führungskraft (15) ausübend ausgebildet ist und bei einer Bewegung der Tankklappe (3) aus der Offenstellung in die Schließstellung eine die Ausstellkraft (14) überwindende Rückführkraft (16) auf die Tankklappe (3) ausübend ausgebildet ist, wobei das motorische Antriebselement (7) in einem vorbestimmten Abstand (17) zu dem Träger (4) und/oder zu der Tankklappe (3) angeordnet ist und über eine Zugeinrichtung (18) mit der Tankklappe (3) bewegungsverbunden ist,
wobei die Zugeinrichtung (18) über ein Getriebeelement (19) mit der Tankklappe (3) gekoppelt ist,
wobei das Getriebeelement (19) als ein drehbar gelagertes Scheibenelement (20) ausgebildet ist,
wobei das Scheibenelement (20) an dem Träger (4) drehbar gelagert ist,
wobei die Tankklappe (3) mittels einer Schwenkachse (9) schwenkbar an dem Träger (4) gelagert ist, wobei das Scheibenelement (20) um eine Drehachse (31) drehbar ist, die an dem Träger (4) gelagert ist, und wobei die Drehachse (31) zu der Schwenkachse (9) beabstandet angeordnet ist.

2. Tankklappen-System (2) nach Anspruch 1, wobei die Zugeinrichtung (18) als ein Seil (21) mit einem ersten Ende (22) und einem zweiten Ende (23) ausgebildet ist, wobei das erste Ende (22) des Seils (21) mit dem motorischen Antriebselement (7) verbunden ist und das zweite Ende (23) des Seils (21) mit der Tankklappe (3) verbunden ist, und wobei das Seil (21) zwischen seinem ersten Ende (22) und seinem zweiten Ende (23) an einem Festlegungspunkt (24) an dem Scheibenelement (20) fixiert ist.

3. Tankklappen-System (2) nach Anspruch 2, wobei das Scheibenelement (20) einen Achszapfen (25) aufweist, welcher sich vom Zentrum des Scheibenelements (20) aus und in axialer Richtung des Scheibenelements (20) erstreckt, wobei ein Abschnitt des Seils (21), welcher zwischen dem ersten Ende (22) und dem Festlegungspunkt (24) liegt, um den Achszapfen (25) geführt ist.

4. Tankkappen-System (2) nach Anspruch 3, wobei der Achszapfen (25) einen Achsdurchmesser (26) aufweist und das Scheibenelement (20) einen Scheibendurchmesser (27) aufweist, und wobei der Achsdurchmesser (26) kleiner ist als der Scheibendurchmesser (27).

5. Tankklappen-System (2) nach Anspruch 1, wobei die Zugeinrichtung (18) ein erstes Seil und ein zweites Seil aufweist, wobei das erste Seil das motorische Antriebselement (7) mit dem Scheibenelement (20) bewegungskoppelnd verbindet, und wobei das zweite Seil das Scheibenelement (20) mit der Tankklappe (3) bewegungskoppelnd verbindet.

6. Tankklappen-System (2) nach einem der Ansprüche 2 bis 5, wobei das Scheibenelement (20) eine zum Aufrollen oder Abrollen zumindest eines Abschnitts der Zugeinrichtung (18) ausgebildete Wickelkontur (28) aufweist.

7. Tankklappen-System (2) nach Anspruch 6, wobei die Wickelkontur (28) mit wenigstens zwei unterschiedlichen, stetig ineinander übergehenden Radien (29, 30) oder exzentrisch ausgebildet ist.

8. Tankklappen-System (2) nach Anspruch 1, wobei die Zugeinrichtung (18) eine Seilschlaufe (32) und ein Seil (33) aufweist, wobei die Seilschlaufe (32) um einen sich vom Zentrum des Scheibenelements (20) aus und in axialer Richtung des Scheibenelements (20) erstreckenden Achszapfen (25) und um einen Antriebszapfen (34) des motorischen Antriebselements (7) gewunden ist, und wobei das Seil (33) das Scheibenelement (20) mit der Tankklappe (3) bewegungskoppelnd verbindet.

9. Tankklappen-System (2) nach Anspruch 1, wobei die Zugeinrichtung (18) eine Flex-Welle und ein Seil aufweist, wobei die Flex-Welle das motorische Antriebselement (7) und das Scheibenelement (20) bewegungsgekoppelt verbindet, und wobei das Seil das Scheibenelement (20) mit der Tankklappe (3) bewegungskoppelnd verbindet.

10. Tankklappen-System (2) nach Anspruch 1, wobei die Zugeinrichtung (18) ein Seil und ein Zugmittel aufweist, wobei das Seil das Scheibenelement (20) mit der Tankklappe (3) bewegungskoppelnd verbindet, und wobei das Zugmittel das motorische Antriebselement (7) und das Scheibenelement (20) bewegungsgekoppelt verbindet.

11. Tankklappen-System (2) nach Anspruch 10, wobei das Zugmittel als ein Zahnriemen ausgebildet ist und das Scheibenelement (20) eine Zahnriemenscheibe aufweist.

12. Tankklappen-System (2) nach Anspruch 10, **dadurch gekennzeichnet, dass** das Zugmittel als eine Zahnkette ausgebildet ist und das Scheibenelement (20) ein Antriebsritzel für die Zahnkette aufweist.

13. Tankklappen-System (2) nach Anspruch 10, wobei das Zugmittel als ein Flachriemen oder als ein Keilriemen ausgebildet ist und das Scheibenelement (20) eine Riemenscheibe aufweist.

14. Tankklappen-System (2) nach einem der Ansprüche 1 bis 13, wobei an dem Scheibenelement (20) eine Exzenterkontur (35) angeformt ist, welche von der Schließstellung bis zu einer zwischen der Schließstellung und der Offenstellung liegenden Anfangsausstellposition mit der Tankklappe (3) zusammenwirkt, wenn die Ausstellkraft (14) des mechanischen Ausstellelements (8) die Tankklappe (3) nicht aus der Schließstellung heraus bis in die Anfangsausstellposition drängt.

15. Tankklappen-System (2) nach einem der vorhergehenden Ansprüche, wobei das mechanische Ausstellelement (8) eine um eine die Tankklappe (3) lagernde Schwenkachse (7) gewundene Drehfeder (10) ist, von welcher sich ein erster Federarm (11) an der Tankklappe (3) abstützt und von welcher sich ein zweiter Federarm (12) an dem Träger (4) abstützt.

## Claims

1. Fuel filler flap system (2) for a motor vehicle (1), comprising a carrier (4), a fuel filler flap (3) pivotably mounted on the carrier (4) and designed to be movable between a closed position and an open position, and a movement mechanism (6) designed to move the fuel filler flap (3) from the closed position to the open position and back to the closed position, wherein the movement mechanism (6) comprises a motor drive element (7) and a mechanical opening element (8), wherein the mechanical opening element (8) is designed to exert an opening force (14) on the fuel filler flap (3) in the open position, wherein the motor drive element (7) is designed to exert a guiding force (15) counteracting the opening force (14) when the fuel filler flap (3) moves from the closed position to the open position, and to exert a return force (16) overcoming the opening force (14) on the fuel filler flap (3) when the fuel filler flap (3) moves from the open position to the closed position (3), wherein the motor drive element (7) is arranged at a predetermined distance (17) from the carrier (4) and/or from the fuel filler flap (3) and is connected to the fuel filler flap (3) in a manner such that it can move via a pulling device (18),
wherein the pulling device (18) is coupled to the fuel filler flap (3) via a gear element (19),
wherein the gear element (19) is designed as a rotatably mounted disc element (20),
wherein the disc element (20) is rotatably mounted on the carrier (4),
wherein the fuel filler flap (3) is pivotably mounted on the carrier (4) by means of a pivot axis (9), wherein the disc element (20) is rotatable about a rotation axis (31) which is mounted on the carrier (4), and wherein the rotation axis (31) is spaced apart from the pivot axis (9).

2. Fuel filler flap system (2) according to claim 1, wherein the pulling device (18) is designed as a cable (21) with a first end (22) and a second end (23), wherein the first end (22) of the cable (21) is connected to the motor drive element (7) and the second end (23) of the cable (21) is connected to the fuel filler flap (3), and wherein the cable (21) is fixed between its first end (22) and its second end (23) at a fixing point (24) on the disc element (20).

3. Fuel filler flap system (2) according to claim 2, wherein the disc element (20) has an axle pin (25) which extends from the center of the disc element (20) and in the axial direction of the disc element (20), wherein a section of the cable (21) lying between the first end (22) and the fixing point (24) is guided around the axle pin (25).

4. Fuel filler flap system (2) according to claim 3, wherein the axle pin (25) has an axle diameter (26) and the disc element (20) has a disc diameter (27), and wherein the axle diameter (26) is smaller than the disc diameter (27).

5. Fuel filler flap system (2) according to claim 1, wherein the pulling device (18) has a first rope and a second rope, wherein the first rope connects the motor drive element (7) to the disc element (20) in a manner that allows movement, and wherein the second rope connects the disc element (20) to the fuel filler flap (3) in a manner that allows movement.

6. Fuel filler flap system (2) according to any one of claims 2 to 5, wherein the disc element (20) has a winding contour (28) designed for winding or unwinding at least one section of the pulling device (18).

7. Fuel filler flap system (2) according to claim 6, wherein the winding contour (28) is designed with at least two different radii (29, 30) that merge continuously into one another or are eccentric.

8. Fuel filler flap system (2) according to claim 1, wherein the pulling device (18) has a rope loop (32) and a rope (33), wherein the rope loop (32) is wound around an axle pin (25) extending from the center of the disc element (20) and in the axial direction of the disc element (20) and around a drive pin (34) of the motor drive element (7), and wherein the rope (33) connects the disc element (20) to the fuel filler flap (3) in a manner that allows movement.

9. Fuel filler flap system (2) according to claim 1, wherein the pulling device (18) comprises a flex shaft and a rope, wherein the flex shaft connects the motor drive element (7) and the disc element (20) in a movement-coupled manner, and wherein the rope connects the disc element (20) to the fuel filler flap (3) in a movement-coupled manner.

10. Fuel filler flap system (2) according to claim 1, wherein the pulling device (18) comprises a rope and a pulling means, wherein the rope connects the disc element (20) to the fuel filler flap (3) in a movement-coupled manner, and wherein the pulling means connects the motor drive element (7) and the disc element (20) in a movement-coupled manner.

11. Fuel filler flap system (2) according to claim 10, wherein the pulling means is designed as a toothed belt and the disc element (20) has a toothed belt pulley.

12. Fuel filler flap system (2) according to claim 10, **characterized in that** the pulling means is designed as a toothed chain and the disc element (20) has a drive pinion for the toothed chain.

13. Fuel filler flap system (2) according to claim 10, wherein the pulling means is designed as a flat belt or as a V-belt and the disc element (20) has a belt pulley.

14. Fuel filler flap system (2) according to any one of claims 1 to 13, wherein an eccentric contour (35) is formed on the disc element (20), which cooperates with the fuel filler flap (3) from the closed position to an initial opening position located between the closed position and the open position when the opening force (14) of the mechanical opening element (8) does not push the fuel filler flap (3) out of the closed position into the initial opening position.

15. Fuel filler flap system (2) according to one of the preceding claims, wherein the mechanical opening element (8) is a torsion spring (10) wound around a pivot axis (7) on which the fuel filler flap (3) is mounted, from which a first spring arm (11) is supported on the fuel filler flap (3) and from which a second spring arm (12) is supported on the carrier (4).

## Revendications

1. Système de trappe de réservoir (2) pour un véhicule automobile (1), comprenant un support (4), une trappe de réservoir (3) monté de manière pivotante sur le support (4) et pouvant être déplacé entre une position fermée et une position ouverte, et un mécanisme de déplacement (6) conçu pour déplacer la trappe de réservoir (3) de la position fermée à la position ouverte et de la position ouverte à la position fermée, le mécanisme de déplacement (6) comportant un élément d'entraînement motorisé (7) et un élément mécanique d'éjection (8), l'élément mécanique d'éjection (8) étant conçu pour exercer une force d'ouverture (14) agissant dans la position ouverte sur la trappe de réservoir (3), l'élément d'entraînement motorisé (7) étant conçu pour exercer, lors d'un mouvement de la trappe de réservoir (3) de la position fermée à la position ouverte, une force de guidage (15) s'opposant à la force d'ouverture (14) et, lors d'un mouvement de la trappe de réservoir (3) de la position ouverte à la position fermée, une force de rappel (16) sur la trappe de réservoir (3) qui surmonte la force d'ouverture (14), l'élément d'entraînement motorisé (7) étant disposé à une distance prédéterminée (17) du support (4) et/ou de la trappe de réservoir (3) et étant relié en mouvement à la trappe de réservoir (3) par l'intermédiaire d'un dispositif de traction (18),
le dispositif de traction (18) étant couplé à la trappe de réservoir (3) par l'intermédiaire d'un élément d'engrenage (19),
l'élément d'engrenage (19) étant conçu comme un élément de disque (20) monté de manière rotative,
l'élément de disque (20) étant monté de manière rotative sur le support (4),
la trappe de réservoir (3) étant montée pivotante sur le support (4) au moyen d'un axe de pivotement (9), l'élément en disque (20) étant monté rotatif autour d'un axe de rotation (31) qui est monté sur le support (4), l'axe de rotation (31) étant disposé à distance de l'axe de pivotement (9).

2. Système de trappe de réservoir (2) selon la revendication 1, dans lequel le dispositif de traction (18) est conçu comme un câble (21) avec une première extrémité (22) et une deuxième extrémité (23), la première extrémité (22) du câble (21) étant reliée à l'élément d'entraînement motorisé (7) et la deuxième extrémité (23) du câble (21) est reliée à la trappe de réservoir (3), et le câble (21) étant fixé entre sa première extrémité (22) et sa deuxième extrémité (23) en un point de fixation (24) sur l'élément de disque (20).

3. Système de trappe de réservoir (2) selon la revendication 2, dans lequel l'élément de disque (20) comporte un tourillon (25) qui s'étend depuis le centre de l'élément de disque (20) et dans la direction axiale de l'élément de disque (20), une partie du câble (21) qui se trouve entre la première extrémité (22) et le point de fixation (24) est guidée autour du tourillon (25).

4. Système de trappe de réservoir (2) selon la revendication 3, dans lequel le tourillon (25) présente un diamètre d'axe (26) et l'élément de disque (20) présente un diamètre de disque (27), et dans lequel le diamètre d'axe (26) est inférieur au diamètre de disque (27).

5. Système de trappe de réservoir (2) selon la revendication 1, dans lequel le dispositif de traction (18) comporte un premier câble et un deuxième câble, le premier câble reliant l'élément d'entraînement motorisé (7) à l'élément de disque (20) de manière à coupler les mouvements, et le deuxième câble reliant l'élément de disque (20) à la trappe de réservoir (3) de manière à coupler les mouvements.

6. Système de trappe de réservoir (2) selon l'une des revendications 2 à 5, l'élément de disque (20) présentant un contour d'enroulement (28) conçu pour enrouler ou dérouler au moins une partie du dispositif de traction (18).

7. Système de trappe de réservoir (2) selon la revendication 6, le contour d'enroulement (28) étant formé avec au moins deux rayons différents (29, 30) se fondant continuellement l'un dans l'autre ou de manière excentrique.

8. Système de trappe de réservoir (2) selon la revendication 1, dans lequel le dispositif de traction (18) comporte une boucle de câble (32) et un câble (33), la boucle de câble (32) s'étendant autour d'un axe d'essieu (25) s'étendant depuis le centre de l'élément de disque (20) et dans la direction axiale de l'élément de disque (20) et autour d'un tourillon d'entraînement (34) de l'élément d'entraînement motorisé (7), et le câble (33) reliant l'élément de disque (20) à la trappe de réservoir (3) de manière à coupler les mouvements.

9. Système de trappe de réservoir (2) selon la revendication 1, dans lequel le dispositif de traction (18) comprend un arbre flexible et un câble, l'arbre flexible reliant l'élément d'entraînement motorisé (7) et l'élément de disque (20) de manière à coupler leurs mouvements, et le câble reliant l'élément de disque (20) à la trappe de réservoir (3) de manière à coupler leurs mouvements.

10. Système de trappe de réservoir (2) selon la revendication 1, dans lequel le dispositif de traction (18) comprend un câble et un moyen de traction, le câble reliant l'élément de disque (20) à la trappe de réservoir (3) de manière à coupler les mouvements, et le moyen de traction reliant l' l'élément d'entraînement motorisé (7) et l'élément de disque (20) de manière à coupler les mouvements.

11. Système de trappe de réservoir (2) selon la revendication 10, le moyen de traction étant conçu comme une courroie crantée et l'élément de disque (20) comportant une poulie crantée.

12. Système de trappe de réservoir (2) selon la revendication 10, **caractérisé en ce que** le moyen de traction est conçu comme une chaîne dentée et que l'élément de disque (20) comporte un pignon d'entraînement pour la chaîne dentée.

13. Système de trappe de réservoir (2) selon la revendication 10, dans lequel le moyen de traction est conçu sous forme de courroie plate ou de courroie trapézoïdale et l'élément de disque (20) comporte une poulie.

14. Système de trappe de réservoir (2) selon l'une des revendications 1 à 13, dans lequel un contour excentrique (35) est formé sur l'élément de disque (20), lequel coopère avec la trappe de réservoir (3) depuis la position de fermeture jusqu'à une position d'ouverture initiale située entre la position de fermeture et la position d'ouverture lorsque la force d'ouverture (14) de l'élément mécanique d'éjection (8) ne pousse pas la trappe de réservoir (3) de la position fermée à la position d'ouverture initiale.

15. Système de trappe de réservoir (2) selon l'une des revendications précédentes, dans lequel l'élément mécanique d'éjection (8) est un ressort de torsion (10) enroulé autour d'un axe de pivotement (7) tournant autour de la trappe de réservoir (3), à partir duquel un premier bras de ressort (11) s'appuie sur la trappe de réservoir (3) et à partir duquel un deuxième bras de ressort (12) s'appuie sur le support (4).
